(19) Europäisches Patentamt
European Patent Office
Office européen des brevets

(11) **EP 2 937 801 B1**

(12) **EUROPEAN PATENT SPECIFICATION**

(45) Date of publication and mention
of the grant of the patent:
**31.03.2021   Bulletin 2021/13**

(21) Application number: **13865436.3**

(22) Date of filing: **12.11.2013**

(51) Int Cl.:
*G06F 21/51* (2013.01)          *H04L 29/06* (2006.01)
*G06F 21/56* (2013.01)          *G06F 16/958* (2019.01)

(86) International application number:
**PCT/KR2013/010216**

(87) International publication number:
**WO 2014/098372 (26.06.2014 Gazette 2014/26)**

(54) **HARMFUL SITE COLLECTION DEVICE AND METHOD**

VORRICHTUNG UND VERFAHREN ZUR SAMMLUNG GEFÄHRLICHER WEBSITES

DISPOSITIF ET MÉTHODE DE COLLECTE DE SITES DANGEREUX

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2012   KR 20120149671**

(43) Date of publication of application:
**28.10.2015   Bulletin 2015/44**

(73) Proprietor: **Foundation Of Soongsil
University-Industry Cooperation
Seoul 156-743 (KR)**

(72) Inventors:
• **LEE, Sangjun
Seongnam-si
Gyeonggi-do 463-926 (KR)**
• **SHIN, Junghoon
Seoul 122-923 (KR)**

(74) Representative: **Jordan, Volker Otto Wilhelm et al
Weickmann & Weickmann
Patent- und Rechtsanwälte PartmbB
Postfach 860 820
81635 München (DE)**

(56) References cited:
US-A1- 2001 037 385     US-A1- 2006 041 508
US-A1- 2007 005 652     US-A1- 2007 005 652
US-A1- 2008 208 858     US-A1- 2009 178 116
US-A1- 2009 198 673     US-B1- 6 996 845
US-B1- 7 698 442

• **AHMED BELDERRAR ET AL: "Sub-graph Mining:
Identifying Micro-architectures in Evolving
Object-Oriented Software", SOFTWARE
MAINTENANCE AND REENGINEERING (CSMR),
2011 15TH EUROPEAN CONFERENCE ON, IEEE,
1 March 2011 (2011-03-01), pages 171-180,
XP031936851, DOI: 10.1109/CSMR.2011.23 ISBN:
978-1-61284-259-2**
• **"Privacy-Preserving Payload-Based Correlation
for Accurate Malicious Traffic Detection", ACM,
2 PENN PLAZA, SUITE 701 - NEW YORK USA, 15
September 2006 (2006-09-15), XP040047658,**

**Description**

The present invention relates to a harmful site collection device and method in which a harmful site is automatically determined and added to a list.

The wide use of a global network such as the Internet that links devices worldwide has brought rapid changes in modern people's daily life. The old era is gone in which people strive for information, and a new era has come in which it is important how useful information is selected from an overflowing abundance of information stored in information database that is easily accessible via the Internet. Actually, the sharing of information through the Internet has contributed amazingly to the technical development by and knowledge sharing between modern people. However, easy accessibility and rapid information diffusion also involve many side effects.

Examples of the side effects caused by the Internet may include the leakage and easy accessibility of personal information due to poor security and the flood of pornographic materials commercially available on the Internet. Actually, it is statistically known that the most commercially successful business among Internet businesses is a pornographic material business, and thus the distribution of the pornographic materials through the Internet causes a big social issue.

People from children to adults who can use their personal computer without any difficulty are randomly exposed to harmful sites. Thus, hardware devices and software programs are being developed to prevent computer terminals from accessing such harmful sites at home or in office.

A harmful site blocking technique is largely divided into two: a method of analyzing contents of a website in real time to determine whether the website is harmful or not; and a method of using a harmful site database to block access to the harmful sites. Most harmful site blocking techniques used in the present employ the method of using a harmful site database to block access to the harmful sites. This method is more convenient and effective than the real-time analysis method.

US-A1-2007/005652 discloses an apparatus and method for collecting harmful websites. Potentially harmful websites are identified on basis of parsing the website for the occurrence of certain keywords. Harmless websites are identified based on top-level domain names and a harmless URL list.

US 6 966 845 B1 discloses an automated Web security analysis system and process for identifying security vulnerabilities in a target Internet Web site by parsing through the target Web site to search for a predetermined list of common security vulnerabilities.

US 2009/0198673 A1 discloses a method of collecting harmful website information, the method comprising:

extracting a first URL linked in a harmful website web page;
performing a link circulation analysis which is configured to check a link circulation relation starting from a first web page of a first URL and determining whether the first web page is harmful according to the link circulation analysis, wherein the determining of whether the first web page of the first URL is harmful according to the link circulation analysis further comprises calculating a directed graph including at least one web page linked in the first web page of the first URL to check a connection there between and confirming the first web page of the first URL being harmful if a predetermined confirmed harmful website is included in the directed graph.

However, new harmful sites are constantly appearing, and contents and addresses of the websites are frequently changed. Thus, it is difficult and also takes too much time for people to manually maintain the harmful site database in the latest version.

The present invention is directed to providing a harmful site collection device and method, which analyze a connection between harmful sites and automatically determine a harmful site with high efficiency.

The present invention is also directed to providing a harmful site collection device and method, which, when a URL collected to determine a harmful site is the same as a pre-stored URL of a non-harmful site, removes the URL from the determination in advance such that the URL may not be used to check a connection between harmful sites.

To this end, the invention provides the method according to claim 1 and the apparatus according to claim 4. Preferred embodiments are defined in the dependent claims.

One aspect of the present invention provides a harmful site collection device including: a database configured to store a harmful site URL and a non-harmful site URL; a web page collection and extraction unit configured to collect web page information using, as a start point, a URL linked to a harmful site web page indicated by the harmful site URL and extract link information included in the web page information; a URL processing unit configured to normalize a URL included in the link information to create a representative URL, remove the representative URL when the representative URL is the same as the non-harmful site URL, and store, as a provisional harmful site URL in the database, a representative URL that is not the same as the harmful site URL among representative URLs in which the non-harmful site URL is removed therefrom; and a harmful site connection analysis unit configured to check a link circulation using the provisional harmful site URL as a start point and determine whether a web page of the provisional harmful site URL is a harmful site according to the link circulation.

The URL processing unit may divide a URL included in the link information extracted by the web page collection and extraction unit into a sub-page URL and an other-page URL and extracts a representative URL in which a sub-directory of the other-page URL is removed therefrom.

The database may store a URL of a confirmed harmful site and a URL of a provisional harmful site.

The harmful site connection analysis unit determining whether a web page of the provisional harmful site URL is a harmful site according to the link circulation may include calculating a directed graph showing a link circulation using a URL linked to the harmful site web page as a start point and confirming the URL as a harmful site when a URL of at least one web page among web pages included in the directed graph is the same as the harmful site URL prestored in the database.

The database may store statistical analysis information regarding words included in the harmful site URL.

The harmful site collection device may further include a harmful site rank calculation unit configured to calculate a harmful site rank of the web page of the URL linked to the harmful site web page when the web page of the URL linked to the harmful site web page is checked not to be a harmful site according to the link circulation.

The harmful site rank calculation unit calculating a harmful site rank of the web page of the URL linked to the harmful site web page may include checking whether the URL linked to the harmful site web page includes a word included in the harmful site ULR stored in the database and calculating a harmful site rank according to statistical analysis information regarding the word when the word is included.

A method of collecting a harmful site may include: extracting a URL linked to a harmful site web page; checking a link circulation using a web page of a URL linked to the harmful site web page and determining whether the web page of the URL linked to the harmful site web page is a harmful site according to the link circulation; and when a prestored non-harmful site URL is extracted while the link circulation is checked, stopping checking the link circulation including the non-harmful site URL.

The determining of whether the web page of the URL linked to the harmful site web page is a harmful site according to the link circulation may include calculating a directed graph including at least one web page linked to the web page of the URL linked to the harmful site web page to check a connection therebetween and confirming the web page of the URL linked to the harmful site web page as a harmful site when a predetermined confirmed harmful site is included in the directed graph.

The method may further include calculating a harmful site rank of the web page of the URL linked to the harmful site web page when the web page of the URL linked to the harmful site web page is checked not to be a harmful site according to the link circulation, in which the calculating of the harmful site rank may include calculating the harmful site rank according to whether the URL linked to the harmful site web page includes a word included in the harmful site URL and statistical analysis information regarding the word.

As described above, according to one aspect of the present invention, the harmful site collection device can determine a harmful site more easily using a connection of a URL linked to a web page.

The harmful site collection device can remove a non-harmful site list when determining a link circulation connected to determine a harmful site, thus reducing the amount of computation.

FIG. 1 is a block diagram showing a harmful site collection device according to an embodiment of the present invention.

FIG. 2 is a conceptual diagram for describing an operation of a URL processing unit of FIG. 1.

FIG. 3 is a diagram for describing directed graphs that are calculated by a harmful site connection analysis unit of FIG. 1.

FIG. 4 is a block diagram showing a harmful site collection device according to another embodiment of the present invention.

FIG. 5 is a conceptual view for describing a principle in which a rank is calculated by a harmful site rank calculation unit of FIG. 4.

FIG. 6 is a diagram for describing a distributed processing method of the harmful site collection device according to an embodiment of the present invention.

FIG. 7 is a control flowchart of the harmful site collection device according to an embodiment of the present invention.

FIG. 8 is a control flowchart of the harmful site collection device according to another embodiment of the present invention.

Hereinafter, exemplary embodiments of the present invention will be described in detail with reference to the accompanying drawings. In adding reference numbers for elements in each figure, it should be noted that like reference numbers already used to denote like elements in other figures are used for elements wherever possible.

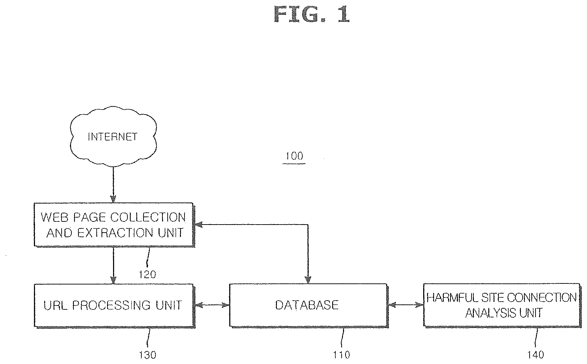

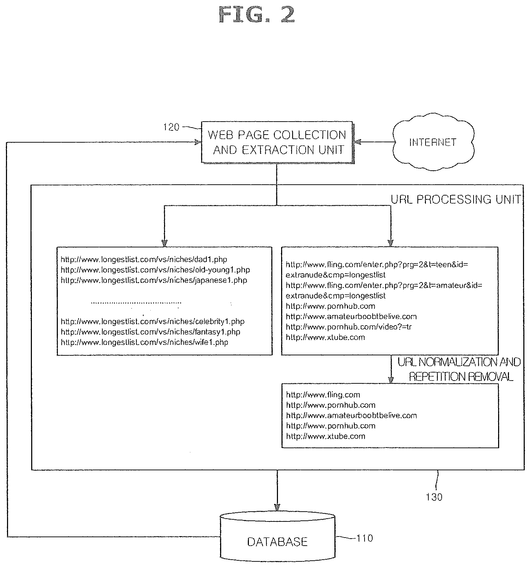

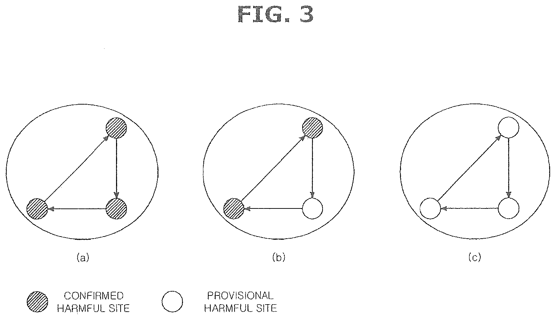

FIG. 1 is a block diagram showing a harmful site collection device according to an embodiment of the present invention, FIG. 2 is a conceptual diagram for describing an operation of a URL processing unit of FIG. 1, and FIG. 3 is a diagram for describing directed graphs that are calculated by a harmful site connection analysis unit of FIG. 1.

A harmful site collection device 100 may include a database 110, a webpage collection and extraction unit 120, a URL processing unit 130, and a harmful site connection analysis unit 140.

The database 110 may store a harmful site list. The harmful site list may be a list in which information on uniform resource locators (URLs) of harmful sites is arranged. The database 110 may store a list of URL information of confirmed harmful sites and a list of URL information of provisional harmful sites.

The database 110 may store a non-harmful site list. The non-harmful site list may be a list in which URL information of non-harmful sites is arranged.

The database 110 may store statistical analysis information regarding words included in a URL classified as a harmful site. The statistical analysis information regarding words may include information on the probability that a site including the words belongs to a harmful site. The information on the probability of belonging to the harmful site may be entered to the database 110 by a designer or automatically calculated and then stored. For the former, the designer manually enters, to the database 110, information provided by analyzing the URL classified as a harmful site. For the latter, the URL processing unit 130 parses a prestored URL of a harmful site to extract words, calculates statistical analysis information using the number of extracted words, and stores the calculated information in the database 110. In this case, as the number of overlaps between words extracted from URLs of a plurality of harmful sites increases, statistical analysis information indicating that the probability of belonging to the harmful site increases may be calculated and then stored. On the contrary, as the number of overlaps between words decreases, statistical analysis information indicating that the probability of belonging to the harmful site decreases may be calculated and then stored.

The web page collection and extraction unit 120 may collect information on a corresponding web page and extract link information included in the web page information in a web crawling technique.

The web page collection and extraction unit 120 may receive a URL of a confirmed harmful site from the database 110 and download a corresponding web page from the Internet The web page collection and extraction unit 120 may parse the downloaded web page to extract information on all links. Here, the link information may include URL information or IP information, and the URL information may be defined as a hyper text markup language (HTML) tag as Equation 1 below:

$$\text{Equation 1}$$

$$a \; href = \text{"http://www.host.com/dirctory/file.html"}>Link</a>.$$

The URL processing unit 130 may divide the URL information included in the link information into a sub-page URL information and other-page URL information. The URL processing unit 130 may compare the extracted sub-page URL information and other-page URL information with harmful site URL information and non-harmful site URL information that are prestored in the database 110 to extract only new URL information. The URL processing unit 130 may add the extracted new URL information to a provisional harmful site list of the database 110.

Referring to FIG. 2, the web page collection and extraction unit 120 may receive a URL of a confirmed harmful site from the database 110 and download a web page corresponding to the URL. The web page collection and extraction unit 120 may parse the web page to extract link information in a web crawling technique. The URL processing unit 130 may divide URL information included in the link information into sub-page URL information and other-page URL information. The URL processing unit 130 may compare the sub-page URL information with harmful site URL information stored in the database 110, determine whether the sub-page is visited, extract only URL information on sub-pages that have never been visited, and stores the extracted sub-page URL information in the database 110. The URL processing unit 130 may normalize the other-page URL information and extract representative URL information. Here, the normalization of the other-page URL information denotes a series of process of removing a subdirectory from among the URL information, extracting URL information only having "protocol information" and "position information regarding a computer having information resources," and removing repeated URL information from among the extracted URL information. For example, the normalization denotes a series of process of extracting URL information (3) obtained by removing a subdirectory from URL information (1) or URL information (2).

Equation 2

1) http://www.fling.com/enter.php?prg=2&t=teen&id

2) http://www.fling.com/enter.php?prg=2&t=amateur&id

3) http://www.fling.com/

The URL processing unit 130 may compare the representative URL information obtained by normalizing the other-page URL information with the non-harmful site URL information presto red in the database 110 and perform classification such that a representative URL that is the same as the non-harmful site URL may not be stored in the database 110 as a provisional harmful site URL. Through this process, web pages linked to non-harmful sites are not collected, and thus entire work efficiency can be enhanced.

The URL processing unit 130 may compare the representative URL information (representative URL information in which a URL that is the same as the non-harmful site URL is removed therefrom) obtained by normalizing the other-page URL information with the harmful site URL information stored in the database 110 and add representative URL information that is different from the harmful site URL information to a provisional harmful site list of the database 110.

The harmful site connection analysis unit 140 may create a directed graph indicating link circulation information of a provisional harmful site and confirm the provisional harmful site as a harmful site. The directed graph denotes a graph in which any provisional harmful site is designated as a start point, another site referenced by the provisional harmful site is designated as a first intermediate point, another site referenced by the site of the first intermediate point is designated as a second intermediate point, and a circulation is found in the same manner and ultimately returned to the provisional harmful site corresponding to the start point.

When the link information extracted by the web page collection and extraction unit 120 parsing the web page of the provisional harmful site is temporarily stored in the database 110, the harmful site connection analysis unit 140 may use the link information to analyze another web page connected thereto.

When a non-harmful site prestored in the database 110 is extracted while a connection with a linked web page is analyzed in order to calculate a directed graph, the harmful site connection analysis unit 140 stops analyzing a connection of a corresponding line. For example, assuming that site B is linked to site A, site C is linked to site B, and site C is a prestored non-harmful site, the harmful site connection analysis unit 140 stop analyzing a connection of a corresponding line. In this case, the amount of data used to analyze a connection between harmful sites may be reduced in proportion to the number of prestored non-harmful sites.

Referring to FIG. 3, in case of (a), a directed graph indicating a circulation of confirmed harmful sites is shown. This reflects that there is a high possibility that the harmful sites will reference one another. In case of (b), a circulation is formed by the confirmed harmful sites and the provisional harmful site, and in this case, the provisional harmful site may be confirmed as a harmful site. In case of (c), a circulation is not formed by the confirmed harmful sites and the provisional harmful sites, and thus the provisional harmful sites are not confirmed as harmful sites. However, even in case of (c), there may be a harmful site. Thus, in an embodiment to be described below, ranks of the provisional harmful sites are calculated and provided to a user.

Meanwhile, the directed graphs in FIG. 3 have three vertices. However, it will be appreciated that the graphs may have the form of a straight line connecting two vertices or a polygon having four or more vertices. In addition, it will be appreciated that the directed graph may be an acyclic graph in which a circulation is not formed. In this case, the provisional harmful site included in the acyclic graph is not confirmed as the harmful site and subsequently is subject to calculation of the harmful site rank.

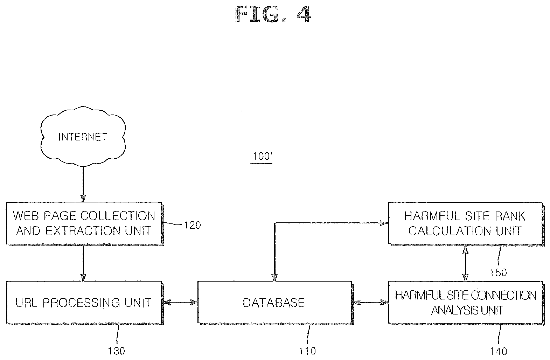

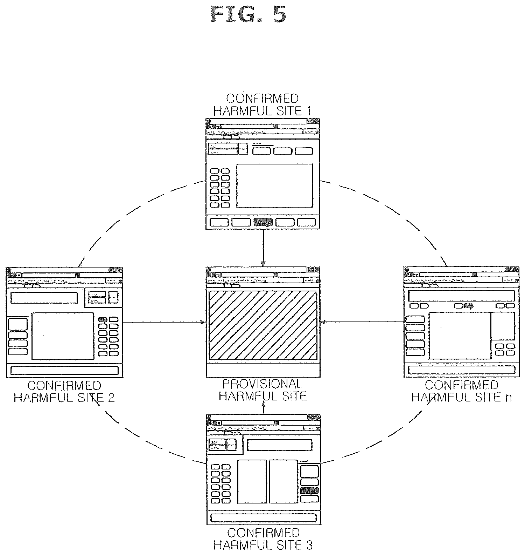

FIG. 4 is a block diagram showing a harmful site collection device according to another embodiment of the present invention, and FIG. 5 is a conceptual view for describing a principle in which a rank is calculated by a harmful site rank calculation unit of FIG. 4.

Compared to an embodiment of FIG. 1, an embodiment of FIG. 4 is characterized in that a harmful site rank calculation unit 150 is additionally included. Accordingly, the description of the same components as those of FIG. 1 is not repeated.

The harmful site rank calculation unit 150 may calculate harmful site ranks of the provisional harmful sites that are not confirmed as a harmful site by the harmful site connection analysis unit 140. This is performed because there may be a harmful site even when the harmful site connection analysis unit 140 creates an acyclic directed graph and thus the provisional harmful sites are not confirmed as the harmful site.

In order to calculate a rank of a provisional harmful site that is not confirmed as a harmful site, the harmful site rank calculation unit 150 may utilize statistical analysis information regarding words included in the harmful site prestored in the database 110 or the number of overlaps between a word included in the URL of the site and a word included in the harmful site that is prestored in the database 110.

Specifically, the harmful site rank calculation unit 150 parses a word included in a URL of a provisional harmful site that is not confirmed as a harmful site and checks whether the parsed word is the same as a word included in the harmful site prestored in the database 110. When the word included in the URL of the provisional harmful site is the same as the word included in the harmful site, the harmful site rank calculation unit 150 may check information on probability of belonging to the harmful site of the word and set the rank according to the probability information. That is, on a condition that the word included in the URL is the same as the word included in the harmful site prestored in the database 110, the rank is set to be high when the word has a high probability of belonging to the harmful site, and the rank is set to be low when the word has a low probability of belonging to the harmful site. That is, the harmful site rank calculation unit 150 may set the rank to be high when the word included in the URL of the provisional harmful site that is not confirmed as the harmful site is a word repeated many times in the URL of the harmful site and set the rank to be low when the word in the URL of the provisional harmful site is a word repeated a few times.

In addition, the harmful site rank calculation unit 150 may set the rank to be high when the URL of the provisional harmful site that is not confirmed as the harmful site includes many words included in the harmful site that is prestored in the database 110 and set the rank to be low when the URL of the provisional harmful site includes a few words.

The harmful site rank calculation unit 150 may calculate a rank in consideration of whether a word included in the URL of the provisional harmful site that is not confirmed as a harmful site is the same as a word included in the harmful site prestored in the database 110 and the number of the same words. First, the harmful site rank calculation unit 150 may calculate the rank according to the number of words of a harmful site URL prestored in the database 110, which are also included in the URL of the provisional harmful site, and calculate ranks of URLs including the same number of harmful site URL words using probability information on the harmful site URL words.

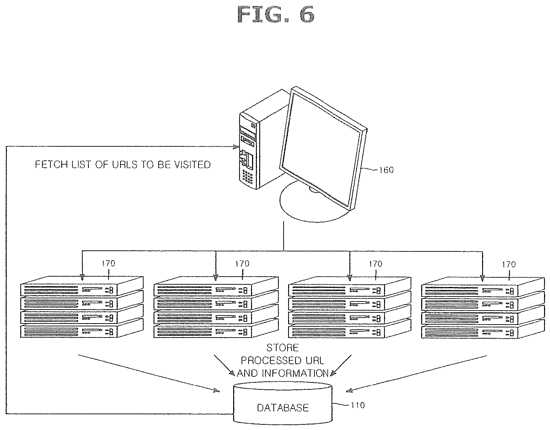

FIG. 6 is a diagram for describing a distributed processing method of the harmful site collection device according to an embodiment of the present invention.

The harmful site collection device 100 may be configured to include a distributed processing master device 160 and distributed processing slave devices 170, which may shorten the time needed to collect and process information by the web page collection and extraction unit 120, the URL processing unit 130, the harmful site connection analysis unit 140, and the harmful site rank calculation unit 150.

The distributed processing master device 160 may receive a list of URLs to be visited from the database 110 and assign the URL list to the distributed processing slave devices 170. Each distributed processing slave device 170 may collect and process web sites corresponding to the assigned URL list to update harmful sites or may calculate a rank of the provisional harmful site and store the calculated rank in the database 110.

It can be seen that a processing speed of the above-described method may increase in proportion to the number of distributed processing slave devices 170, compared to a method in which the distributed processing master device 160 operates independently.

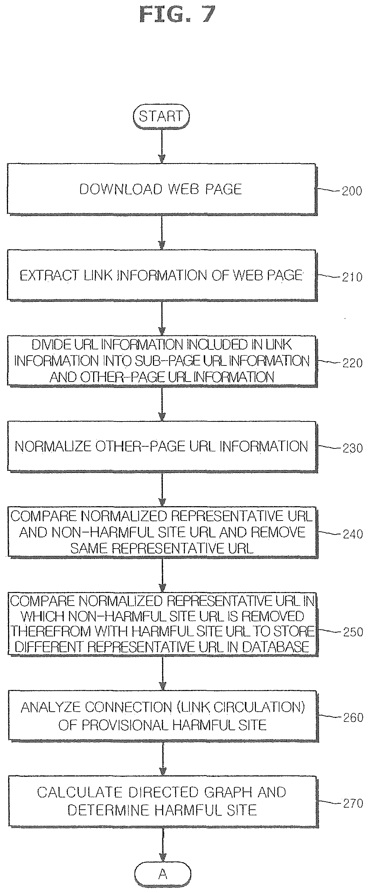

FIG. 7 is a control flowchart of a harmful site collection device according to an embodiment of the present invention.

The webpage collection and extraction unit 120 receives information on URLs to be visited from the database 110 and downloads a web page corresponding to the received URL information (200).

The web page collection and extraction unit 120 extracts link information of the web page in a well-known web crawling technique (210).

The URL processing unit 130 may divide URL information included in the extracted link information into sub-page URL information and other-page URL information. The URL processing unit 130 may compare the extracted sub-page URL information and other-page URL information with URL information prestored in the database 110 to extract only new URL information (220).

The URL processing unit 130 normalizes the other-page URL information to extract representative URL information. As described above, the normalization of the other-page URL information denotes a process of removing a subdirectory from among the URL information and extracting only top URL information (230).

The URL processing unit 130 may compare a normalized representative URL with a non-harmful site URL prestored in the database 110, and when the normalized representative URL is the same as the non-harmful site URL, classify and remove the URL such that the URL may not be stored as the provisional harmful site in the database 110 (240).

The URL processing unit 130 may compare the representative URL in which the non-harmful site URL is removed therefrom with the harmful site URL prestored in the database 110 and store the representative URL that is not the same as the harmful site URL in a provisional harmful site list (250).

The harmful site connection analysis unit 140 may create a directed graph indicating a link circulation of a provisional harmful site and determine whether the provisional harmful site is a harmful site. As described above, the harmful site connection analysis unit 140 may analyze a link of the provisional harmful site to confirm the provisional harmful site as a harmful site when the provisional harmful site forms a circulation with a harmful site and to determine the provisional harmful site not to be a harmful site when the directed graph is not closed or when the directed graph is closed but the provisional harmful site is not linked to a confirmed harmful site. In this case, when a site connected with the provisional harmful site is the prestored non-harmful site while a link circulation of the provisional harmful site is analyzed in order to calculate a directed graph, the harmful site connection analysis unit 140 may stop analyzing a directed graph of a corresponding line, thus increasing analysis efficiency (260, 270).

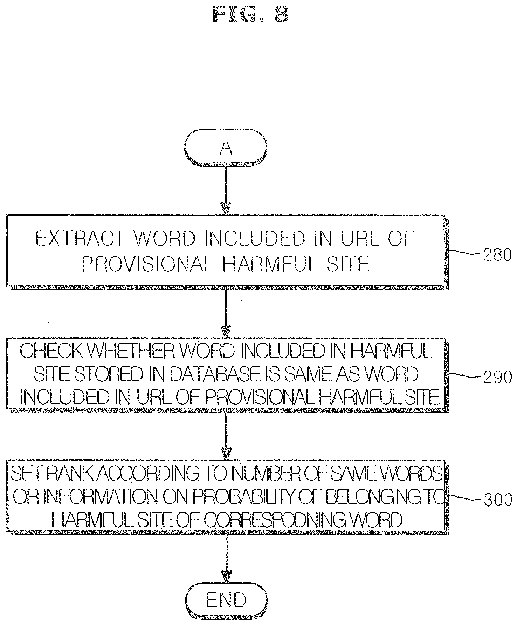

FIG. 8 is a control flowchart of a harmful site collection device according to another embodiment of the present invention.

FIG. 8 is a flowchart for describing a method of calculating a rank of the provisional harmful site that is not yet confirmed as a harmful site after the control flow of FIG. 7 is completed.

The harmful site rank calculation unit 150 may classify provisional harmful sites that are not confirmed as a harmful site by the harmful site connection analysis unit 140. In order to calculate a rank of a provisional harmful site that is not confirmed as a harmful site, the harmful site rank calculation unit 150 may use statistical analysis information regarding words included in the harmful site prestored in the database 110.

The harmful site rank calculation unit 150 parses the URL of the provisional harmful site to extract a word (280).

When the word included in the URL of the provisional harmful site is the same as the word included in the harmful site, the harmful site rank calculation unit 150 may check information on probability of belonging to the harmful site of the word and the number of the same words and may set the rank according to the probability information (290, 300).

## Claims

1. A method of collecting harmful website information, the method comprising:

   extracting a first URL linked in a harmful website web page;
   performing a link circulation analysis which is configured to check a link circulation relation starting from a first web page of a first URL and determining whether the first web page is harmful according to the link circulation analysis; wherein
   the determining of whether the first web page of the first URL is harmful according to the link circulation analysis further comprises calculating a directed graph including at least one web page linked in the first web page of the first URL to check a connection there between and confirming the first web page of the first URL being harmful if a predetermined confirmed harmful website is included in the directed graph, and stopping the performing of the link circulation analysis, if a prestored non-harmful website URL is found in the link circulation relation while performing the link circulation analysis.

2. The method of claim 1, comprising to normalize the first URL to generate a representative URL, to disregard the representative URL if the representative URL is included in a database as non-harmful website URL, and to store the representative URL as a harmful website candidate URL in the database if the representative URL is not included as non-harmful website URL in the database and is not included as harmful website URL in the database;
   wherein the link circulation analysis is performed using the harmful website candidate URL as a start point, to determine whether a second web page referred to by the harmful website candidate URL is harmful according to the link circulation analysis.

3. The method of claims 1 or 2, wherein the method further comprises calculating a harmful website rank of the first web page of the first URL when the first web page of the first URL is determined not to be harmful according to the link circulation analysis,
   wherein the calculating of the harmful website rank comprises calculating the harmful website rank according to whether the first page includes a harmful words.

4. An apparatus (100) for collecting harmful website information comprising:

   a database unit (110) configured to store a harmful website URL and a non-harmful website URL;
   a web page collection and extraction unit (120) configured to collect a first web page using, as a start point, a first URL linked in a harmful website web page referred to by the harmful website URL and extract a second URL contained in the first web page;
   a URL processing unit (130) configured to normalize the second URL to generate a representative URL, to disregard the representative URL if the representative URL is included in the non-harmful website URL, and to store the representative URL as a harmful website candidate URL in the database unit if the representative URL is not included in both of the non-harmful website URL and the harmful website URL; and

a harmful website connection analysis unit (140) configured to perform a link circulation analysis using the harmful website candidate URL as the start point and determine whether a second web page referred to by the harmful website candidate URL is harmful according to the link circulation analysis;

wherein the harmful website connection analysis unit (140) is configured to determine whether a second web page of the harmful website candidate URL is harmful according to the link circulation analysis, wherein the link circulation analysis is configured to generate a directed graph showing a link circulation from the harmful website candidate URL and confirming that the harmful website candidate URL is harmful if at least one web page included in the directed graph is included in the harmful website URL,

the harmful website connection analysis unit (140) is configured to stop performing the link calculation analysis, if a prestored non-harmful website URL is found in the link circulation relation while performing the link circulation analysis.

5. The apparatus (100) of claim 4, wherein the URL processing unit (130) is adapted to divide URL information contained in the first page into a sub-page URL and other-page URLs and to extract the representative URL from each of other-page URLs in which a sub-directory of each of the other-page URLs is removed therefrom.

6. The apparatus (100) of claims 4 or 5, wherein the database unit (110) is adapted to store a list of URLs of confirmed harmful websites and harmful website candidates, and a list of non-harmful sites.

7. The apparatus (100) of one of claims 4 to 6, wherein the database unit (110) is configured to store statistical analysis information regarding harmful words included in the harmful website URL.

8. The apparatus (100) of claim 7, wherein the apparatus (100) further comprises a harmful website rank calculation unit (150) configured to calculate a harmful website rank of the second web page of the harmful website candidate URL, if the second web page is determined not to be harmful according to the link circulation analysis.

9. The apparatus (100) of claim 10, wherein the harmful website rank calculation unit (150) is adapted to calculate a harmful website rank of the second web page of the harmful website candidate URL by checking whether the second web page of the harmful website candidate URL includes the harmful words included in the harmful website URL and calculating the harmful website rank according to the statistical analysis information regarding the harmful words when any of the harmful words are included.

**Patentansprüche**

1. Verfahren zum Sammeln von Schädliche-Website-Information, wobei das Verfahren aufweist:

Extrahieren einer ersten URL, die mit einer Schädliche-Website-Webseite verlinkt ist;

Durchführen einer Linkzirkulationsanalyse, die konfiguriert ist, um eine Linkzirkulationsbeziehung zu prüfen, die von einer ersten Webseite einer ersten URL ausgeht, und Bestimmen gemäß der Linkzirkulationsanalyse, ob die erste Webseite schädlich ist; wobei

das Bestimmen gemäß der Linkzirkulationsanalyse, ob die erste Webseite der ersten URL schädlich ist, ferner aufweist, einen gerichteten Graphen zu berechnen, der zumindest eine Webseite enthält, die in der ersten Webseite der ersten URL gelinkt ist, um eine Verbindung dazwischen zu prüfen, und zu bestätigen, dass die erste Webseite der ersten URL schädlich ist, wenn eine vorbestimmte bestätigte schädliche Website in dem gerichteten Graphen enthalten ist, und die Durchführung der Linkzirkulationsanalyse zu stoppen, wenn eine vorgespeicherte Nicht-schädliche-Website-URL in der Linkzirkulationsbeziehung gefunden wird, während die Linkzirkulationsanalyse durchgeführt wird.

2. Das Verfahren von Anspruch 1, das aufweist, die erste URL zu normalisieren, um eine repräsentative URL zu erzeugen, um die repräsentative URL nicht zu beachten, wenn die repräsentative URL in einer Datenbank als Nicht-schädliche-Website-URL enthalten ist, und um die repräsentative URL als Schädliche-Website-Kandidat-URL in der Datenbank zu speichern, wenn die repräsentative URL nicht als Nicht-schädliche-Website-URL in der Datenbank enthalten ist und nicht als Schädliche-Website-URL in der Datenbank enthalten ist;

wobei die Linkzirkulationsanalyse mittels der Schädliche-Website-URL als Ausgangspunkt durchgeführt wird, um zu bestimmen, ob eine zweite Webseite, auf die sich die Schädliche-Website-Kandidat-URL bezieht, gemäß der Linkzirkulationsanalyse schädlich ist.

**3.** Das Verfahren der Ansprüche 1 oder 2, wobei das Verfahren ferner aufweist, einen Schädliche-Website-Rang der ersten Webseite der ersten URL zu berechnen, wenn die erste Webseite der ersten URL gemäß der Linkzirkulationsanalyse als nicht schädlich bestimmt wird,

wobei das Berechnen des Schädliche-Website-Rangs aufweist, den Schädliche-Website-Rang demgemäß zu berechnen, ob die erste Seite schädliche Worte enthält.

**4.** Vorrichtung (100) zum Sammeln von Schädliche-Website-Information, welche aufweist:

eine Datenbankeinheit (110), die konfiguriert ist, um eine Schädliche-Website-URL und eine Nicht-schädliche-Website-URL zu speichern;

eine Webseite-Sammel- und Extraktionseinheit (120), die konfiguriert ist, um eine erste Webseite unter Verwendung, einer ersten URL als Ausgangspunkt zu sammeln, die in der Schädliche-Website-Webseite verlinkt ist, auf die sich die Schädliche-Website-URL bezieht, und eine in der ersten Webseite enthaltende zweite URL zu extrahieren;

eine URL-Prozesseinheit (130), die konfiguriert ist, um die zweite URL zu normalisieren, um eine repräsentative URL zu erzeugen, um die repräsentative URL nicht zu beachten, wenn die repräsentative URL in der Nicht-schädliche-Website-URL enthalten ist, und um die repräsentative URL als Schädliche-Website-Kandidat-URL in der Datenbankeinheit zu speichern, wenn die repräsentative URL nicht in sowohl der Nicht-schädliche-Website-URL als auch der Schädliche-Website-URL enthalten ist; und

eine Schädliche-Website-Verbindungsanalyseeinheit (140), die konfiguriert ist, um eine Linkzirkulationsanalyse mittels der Schädliche-Website-Kandidat-URL als Ausgangspunkt durchzuführen, und gemäß der Linkzirkulationsanalyse zu bestimmen, ob eine zweite Webseite, auf die sich die Schädliche-Website-Kandidat-URL bezieht, schädlich ist;

wobei die Schädliche-Website-Verbindungsanalyseeinheit (140) konfiguriert ist, um gemäß der Linkzirkulationsanalyse zu bestimmen, ob eine zweite Webseite der Schädliche-Website-Kandidat-URL schädlich ist, wobei die Linkzirkulationsanalyse konfiguriert ist, um einen gerichteten Graphen zu erzeugen, der eine Linkzirkulation von der Schädliche-Website-Kandidat-URL zeigt, und zu bestätigen, dass die Schädliche-Website-Kandidat-URL schädlich ist, wenn zumindest eine Webseite, die in dem gerichteten Graphen enthalten ist, in der Schädliche-Website-URL enthalten ist;

die Schädliche-Website-Verbindungsanalyseeinheit (140) konfiguriert ist, um die Durchführung der Linkzirkulationsanalyse zu stoppen, wenn eine vorgespeicherte Nicht-schädliche-Website-URL in der Linkzirkulationsbeziehung gefunden wird, während die Linkzirkulationsanalyse durchgeführt wird.

**5.** Die Vorrichtung (100) von Anspruch 4, wobei die URL-Prozesseinheit (130) dazu ausgelegt ist, in der ersten Seite enthaltene URL-Information in eine Sub-Seiten-URL und Andere-Seite-URLs zu unterteilen und die repräsentative URL von jeder Andere-Seite-URLs zu extrahieren, aus der ein Unterverzeichnis jeder der Andere-Seite-URLs beseitigt ist.

**6.** Die Vorrichtung (100) der Ansprüche 4 oder 5, wobei die Datenbankeinheit (110) dazu ausgelegt ist, eine Liste von URLs von bestätigen schädlichen Websites und Schädliche-Website-Kandidaten sowie eine Liste von nicht schädlichen Websites zu speichern.

**7.** Die Vorrichtung (100) von einem der Ansprüche 4 bis 6, wobei die Datenbankeinheit (110) konfiguriert ist, um statistische Analyseinformation in Bezug auf schädliche Wörter zu speichern, die in der Schädliche-Website-URL enthalten sind.

**8.** Die Vorrichtung (100) von Anspruch 7, wobei die Vorrichtung (100) ferner eine Schädliche-Website-Rang-Berechnungseinheit (150) aufweist, die konfiguriert ist, um einen Schädliche-Website-Rang der zweiten Webseite der Schädliche-Website-Kandidat-URL zu berechnen, wenn die zweite Webseite gemäß der Linkzirkulationsanalyse als nicht schädlich bestimmt wird.

**9.** Die Vorrichtung (100) von Anspruch 10, wobei die Schädliche-Website-Rang-Berechnungseinheit (150) dazu ausgelegt ist, einen Schädliche-Website-Rang der zweiten Webseite der Schädliche-Website-Kandidat-URL durch Prüfung zu berechnen, ob die zweite Webseite der Schädliche-Website-Kandidat-URL die in der Schädliche-Website-URL enthaltenen schädlichen Worte enthält, und Berechnen des Schädliche-Website-Rangs gemäß der statistischen Analyseinformation in Bezug auf die schädlichen Wörter, wenn eines der schädlichen Worte enthalten ist.

**Revendications**

1.  Procédé de collecte d'informations de site Web dangereux, le procédé comprenant :

    l'extraction d'une première URL liée à une page Web de site Web dangereux ;
    la réalisation d'une analyse de circulation de liens qui est configurée pour vérifier une relation de circulation de liens à partir d'une première page Web d'une première URL et la détermination si la première page Web est dangereuse selon l'analyse de circulation de liens ; dans lequel
    la détermination si la première page Web de la première URL est dangereuse selon l'analyse de circulation de liens comprend en outre le calcul d'un graphe dirigé incluant au moins une page Web liée dans la première page Web de la première URL pour vérifier une connexion entre celles-ci et la confirmation que la première page Web de la première URL est dangereuse si un site Web dangereux confirmé prédéterminé est inclus dans le graphe dirigé, et l'arrêt de la réalisation de l'analyse de circulation de liens, si une URL de site Web non dangereux pré-stockée est trouvée dans la relation de circulation de liens pendant la réalisation de l'analyse de circulation de liens.

2.  Procédé selon la revendication 1, comprenant la normalisation de la première URL pour générer une URL représentative, la négligence de l'URL représentative si l'URL représentative est incluse dans une base de données en tant qu'URL de site Web non dangereux, et le stockage de l'URL représentative comme étant une URL candidate de site Web dangereux dans la base de données si l'URL représentative n'est pas incluse en tant qu'URL de site Web non dangereux dans la base de données et n'est pas incluse comme étant une URL de site Web dangereux dans la base de données ;
    dans lequel l'analyse de circulation de liens est réalisée en utilisant l'URL candidate de site Web dangereux comme point de départ, pour déterminer si une seconde page Web référencée par l'URL candidate de site Web dangereux est dangereuse selon l'analyse de circulation de liens.

3.  Procédé selon les revendications 1 ou 2, dans lequel le procédé comprend en outre le calcul d'un classement de site Web dangereux de la première page Web de la première URL lorsque la première page Web de la première URL est déterminée comme n'étant pas dangereuse selon l'analyse de circulation de liens,
    dans lequel le calcul du classement de site Web dangereux comprend le calcul du classement de site Web dangereux selon que la première page inclut des mots dangereux.

4.  Appareil (100) pour collecter des informations de site Web dangereux comprenant :

    une unité de base de données (110) configurée pour stocker une URL de site Web dangereux et une URL de site Web non dangereux ;
    une unité de collecte et d'extraction de page Web (120) configurée pour collecter une première page Web en utilisant, comme point de départ, une première URL liée à une page Web de site Web dangereux référencée par l'URL de site Web dangereux et extraire une seconde URL contenue dans la première page Web ;
    une unité de traitement d'URL (130) configurée pour normaliser la seconde URL afin de générer une URL représentative, négliger l'URL représentative si l'URL représentative est incluse dans l'URL de site Web non dangereux, et stocker l'URL représentative en tant qu'URL candidate de site Web dangereux dans l'unité de base de données si l'URL représentative n'est pas incluse à la fois dans l'URL de site Web non dangereux et dans l'URL de site Web dangereux ; et
    une unité d'analyse de connexion de site Web dangereux (140) configurée pour réaliser une analyse de circulation de liens en utilisant l'URL candidate de site Web dangereux comme étant le point de départ et déterminer si une seconde page Web référencée par l'URL candidate de site Web dangereux est dangereuse selon l'analyse de circulation de liens ;
    dans lequel l'unité d'analyse de connexion de site Web dangereux (140) est configurée pour déterminer si une seconde page Web de l'URL candidate de site Web dangereux est dangereuse selon l'analyse de circulation de liens, dans lequel
    l'analyse de circulation de liens est configurée pour générer un graphe dirigé montrant une circulation de liens à partir de l'URL candidate de site Web dangereux et confirmant que l'URL candidate de site Web dangereux est dangereuse si au moins une page Web incluse dans le graphe dirigé est incluse dans l'URL de site Web dangereux,
    l'unité d'analyse de connexion de site Web dangereux (140) est configurée pour arrêter la réalisation de l'analyse de calcul de liens, si une URL de site Web non dangereux pré-stockée est trouvée dans la relation de circulation de liens pendant la réalisation de l'analyse de circulation de liens.

5. Appareil (100) selon la revendication 4, dans lequel l'unité de traitement d'URL (130) est adaptée pour diviser des informations d'URL contenues dans la première page en une URL de sous-page et des URL d'autres pages et pour extraire l'URL représentative de chacune des URL d'autres pages dans lesquelles un sous-répertoire de chacune des URL d'autres pages en est supprimé.

6. Appareil (100) selon les revendications 4 ou 5, dans lequel l'unité de base de données (110) est adaptée pour stocker une liste d'URL de sites Web dangereux confirmés et de candidats de sites Web dangereux, et une liste de sites non dangereux.

7. Appareil (100) selon l'une quelconque des revendications 4 à 6, dans lequel l'unité de base de données (110) est configurée pour stocker des informations d'analyse statistique concernant des mots dangereux inclus dans l'URL de site Web dangereux.

8. Appareil (100) selon la revendication 7, dans lequel l'appareil (100) comprend en outre une unité de calcul de classement de site Web dangereux (150) configurée pour calculer un classement de site Web dangereux de la seconde page Web de l'URL candidate de site Web dangereux, si la seconde page Web est déterminée comme n'étant pas dangereuse selon l'analyse de circulation de liens.

9. Appareil (100) selon la revendication 10, dans lequel l'unité de calcul de classement de site Web dangereux (150) est adaptée pour calculer un classement de site Web dangereux de la seconde page Web de l'URL candidate de site Web dangereux en vérifiant si la seconde page Web de l'URL candidate de site Web dangereux inclut les mots dangereux inclus dans l'URL de site Web dangereux et en calculant le classement de site Web dangereux en fonction des informations d'analyse statistique concernant les mots dangereux lorsque l'un quelconque des mots dangereux est inclus.

## FIG. 1

INTERNET

100

WEB PAGE COLLECTION
AND EXTRACTION UNIT

120

URL PROCESSING UNIT

130

DATABASE

110

HARMFUL SITE CONNECTION
ANALYSIS UNIT

140

# FIG. 2

FIG. 3

(a)                              (b)                              (c)

CONFIRMED          PROVISIONAL
HARMFUL SITE        HARMFUL SITE

FIG. 4

INTERNET

100'

WEB PAGE COLLECTION
AND EXTRACTION UNIT — 120

HARMFUL SITE RANK
CALCULATION UNIT

150

URL PROCESSING UNIT

DATABASE

HARMFUL SITE CONNECTION
ANALYSIS UNIT

130

110

140

# FIG. 5

CONFIRMED
HARMFUL SITE 1

CONFIRMED
HARMFUL SITE 2

PROVISIONAL
HARMFUL SITE

CONFIRMED
HARMFUL SITE n

CONFIRMED
HARMFUL SITE 3

## FIG. 6

**FIG. 7**

START

DOWNLOAD WEB PAGE — 200

EXTRACT LINK INFORMATION OF WEB PAGE — 210

DIVIDE URL INFORMATION INCLUDED IN LINK
INFORMATION INTO SUB-PAGE URL INFORMATION
AND OTHER-PAGE URL INFORMATION — 220

NORMALIZE OTHER-PAGE URL INFORMATION — 230

COMPARE NORMALIZED REPRESENTATIVE URL
AND NON-HARMFUL SITE URL AND REMOVE
SAME REPRESENTATIVE URL — 240

COMPARE NORMALIZED REPRESENTATIVE URL IN
WHICH NON-HARMFUL SITE URL IS REMOVED
THEREFROM WITH HARMFUL SITE URL TO STORE
DIFFERENT REPRESENTATIVE URL IN DATABASE — 250

ANALYZE CONNECTION (LINK CIRCULATION)
OF PROVISIONAL HARMFUL SITE — 260

CALCULATE DIRECTED GRAPH AND
DETERMINE HARMFUL SITE — 270

A

FIG. 8

A

EXTRACT WORD INCLUDED IN URL OF PROVISIONAL HARMFUL SITE — 280

CHECK WHETHER WORD INCLUDED IN HARMFUL SITE STORED IN DATABASE IS SAME AS WORD INCLUDED IN URL OF PROVISIONAL HARMFUL SITE — 290

SET RANK ACCORDING TO NUMBER OF SAME WORDS OR INFORMATION ON PROBABILITY OF BELONGING TO HARMFUL SITE OF CORRESPODNING WORD — 300

END

**EP 2 937 801 B1**

**Patent documents cited in the description**

- US 2007005652 A1
- US 6966845 B1
- US 20090198673 A1